# EUROPÄISCHE PATENTANMELDUNG

(11) **EP 2 654 151 A2**
(43) Veröffentlichungstag der Anmeldung: **23.10.2013**
(21) Anmeldenummer: 13305492.4
(22) Anmeldetag: 16.04.2013
(51) Int. Cl.: H02G 3/04

(54) **Verdrahtungskanal mit Sicherungsfunktion zur Vermeidung eines Abrutschens des Deckels**

(30) Priorität: 17.04.2012 DE 202012003820 U
(71) Anmelder: Tehalit GmbH, 67716 Heltersberg (DE)
(72) Erfinder: Henrich, Jonas, 67655 KAISERSLAUTERN (DE); Zimmermann, Otto, 66999 HINTERWEIDENTHAL (DE); Arnold, Hans-Joachim, 67706 KRICKENBACH (DE)
(74) Vertreter: Nuss, Laurent

(57) **Zusammenfassung**

Die vorliegende Erfindung betrifft ein Verdrahtungskanal, bestehend aus
- einem U-förmigen Unterteil (10) mit einem Boden und Seitenwänden (14) sowie daran ausgebildeten Deckelhalteprofilen (11),
- einem U-förmigen Deckel (20) mit Formprofilen (21), dadurch gekennzeichnet, dass die Deckelhalteprofile (11) des Unterteils (10) einen äußeren Schenkelabschnitt (12) bilden, in dem in Längsrichtung des Kanals eine Rändelung (13) eingebracht ist und dass die Formhalteprofile (21) des Deckels (20) einen Formschenkel (22) bilden, an dessen zur Kanalmitte weisenden Innenseite eine Gegenrändelung (23) ausgebildet ist, die sich mit der Rändelung (13) des Unterteils (10) verzahnt, wenn die Formhalteprofile (21) des Deckels (20) beim Aufsetzen des Deckels (20) mit den Deckelhalteprofilen (11) des Unterteils (10) kooperieren.

## Beschreibung

Die vorliegende Erfindung betrifft einen Verdrahtungskanal mit einer Sicherungsfunktion zur Vermeidung eines Abrutschens des Deckels. Verdrahtungskanäle oder Installationskanäle werden seit vielen Jahren überwiegend in Schaltschränken eingesetzt, wo sie der Verlegung von Kabeln und Leitungen dienen. Wie jeder Kanal besitzt ein solcher Verdrahtungskanal ein Unterteil und ein Oberteil (bzw. einen Deckel). Das Unterteil besteht aus einem Boden und Seitenwänden mit daran ausgebildeten Deckelhalteprofilen. Der Deckel selbst besitzt schenkelförmig nach unten geneigte Seitenelemente mit daran ausgebildeten Formhalteprofilen, die zum Halt des Deckels mit den Deckelhalteprofilen des Unterteils kooperieren.

Oftmals werden die Seitenwände des Unterteils durch senkrecht zum Boden verlaufende Schlitze zu Zungen umgeformt und die Zungen mit Sollbruchstellen versehen, um diese ohne Zuhilfenahme eines Werkzeuges bei Bedarf abzubrechen. Solche Verdrahtungskanäle sind beispielsweise in der DE 14 40 231, DE 14 40 237, US 7,060,893 B1 beschrieben.

Solche Installationskanäle werden häufig auch im Anlagen-und Steuerungsbau eingesetzt. Dort dienen sie zur Aufnahme von Kabeln und Steuerleitungen für die Maschinen. Hierfür werden die Kanäle senkrecht montiert, so dass der Deckel aufgrund des Eigengewichtes dazu geneigt ist, entlang des Unterteils nach unten zu rutschen oder gar abzufallen. Um das Abrutschen oder Abfallen des Deckels vom Unterteil zu vermeiden, sind unterschiedliche Lösungen bekannt. In der US 7,060,893 B 1 sind beispielsweise am Deckel an den Formhalteprofilen an der Außenseite einzelne Stifte in regelmäßigen Abständen ausgebildet, die in die Zwischenräume der zungenförmig ausgebildeten Seitenelemente des Unterteils greifen und ein Abrutschen des Deckels vermeiden.

In der DE 299 09 364 wird der Deckel über nach außen stehende Lappen als Verschlussprofil am Kanalunterteil gehalten. Die scharfen Kanten der Lappen dienen gleichzeitig dem Potentialausgleich bei Metallkanälen. Daneben gibt es Rastlösungen, wie sie beispielsweise in der EP 0 742 625 A1, der EP 1 764 889 A2 und der DE 195 23 177 A1 beschrieben sind. In der EP 2 110 913 A2 wird ein Verdrahtungskanal mit Antirutschfunktion beschrieben, bei dem an der Innenseite der Deckelhalteprofile Noppen oder Fahnen ausgebildet sind, welche in die von Zungen gebildeten Schlitze der Seitenwände des Unterteils greifen und ein Abrutschen des Deckels von dem Unterteil verhindern.

Obgleich die im Stand der Technik genannten Ausführungsformen mehr oder weniger wirkungsvoll ein Abrutschen des Deckels verhindern können, ist die Fertigung solcher Kabelkanäle in der Regel eher aufwändig, so dass Bedarf nach einer einfacheren, alternativen Möglichkeit zur Sicherung des Deckels an einem Kanalunterteil besteht.

Es ist daher Aufgabe der vorliegenden Erfindung, einen alternativen Verdrahtungskanal anzugeben, bei dem der Deckel gegenüber dem Unterteil rutschsicher gemacht ist und der gleichzeitig kostengünstig in der Herstellung und einfach bei der Montage ist.

Diese Aufgabe wird gelöst durch einen Verdrahtungskanal mit den Merkmalen des Anspruchs 1. Bevorzugte Ausführungsformen finden sich in den Unteransprüchen wieder.

Der erfindungsgemäße Verdrahtungskanal besteht aus einem U-förmigen Unterteil mit einem Boden und Seitenwänden sowie daran ausgebildeten Deckelhalteprofilen. Darauf wird ein U-förmiger Deckel aufgesetzt. Dieser besitzt seitliche Formhalteprofile, die mit den Deckelhalteprofilen des Unterteils kooperieren. Die Deckelhalteprofile des Unterteils bilden einen äußeren Schenkelabschnitt, in dem in Längsrichtung des Kanals eine Rändelung angebracht ist. Die Formhalteprofile des Deckels wiederum bilden einen Formschenkel, an dessen zur Kanalmitte weisender Innenseite eine Gegenrändelung ausgebildet ist, die sich mit der Rändelung des Unterteils verzahnt, wenn die Formhalteprofile des Deckels zum Aufsetzen des Deckels mit den Deckelhalteprofilen des Unterteils kooperieren. Durch die Verzahnung der Rändelung des Unterteils mit der Gegenrändelung des Oberteils wird ein Abrutschen des Deckels verhindert. Die Verzahnung der Strukturen der Rändelung bzw. Gegenrändelung ist ausreichend, damit der Deckel, selbst in senkrechter Position, auf dem Unterteil des Kanals gehalten wird.

Vorzugsweise verlaufen die Rändelungen des Unterteils und die Gegenrändelungen des Oberteils gleichmäßig entlang der Kanalstrecke. Vorzugsweise ist die Rändelung bzw. die Gegenrändelung durchgehend am Unterteil bzw. Oberteil ausgebildet. Je nach Anwendungsfall kann die Rändelung bzw. Gegenrändelung auch abschnittsweise am Unterteil bzw. Deckel ausgebildet sein.

Die Struktur der Rändelung bzw. Gegenrändelung ist vorzugsweise zackenförmig oder schlitzförmig. Auch andere geometrische Strukturen oder Profile sind denkbar, da diese bei der Herstellung des Kanals mit geringem Aufwand an die entsprechenden Profile des Unterteils bzw. des Deckels angebracht werden können.

Die Deckelhalteprofile des Unterteils und das Fußstück des Formhalteprofils des Oberteils sind vorzugsweise U-förmig ausgebildet. Beim Aufsetzen des Deckels auf das Unterteil wird das U-förmige Fußstück des Formhalteprofils in dem U-Profil des Deckelhalteprofils geführt und der Deckel dadurch in Position gehalten.

Der Schenkelabschnitt des Deckelhalteprofils des Unterteils mit der daran ausgebildeten Rändelung und/oder die Formschenkel des Formhaltprofils des Oberteils mit der daran ausgebildeten Gegenrändelung ist/sind vorzugsweise kurvenförmig oder gewölbt ausgeformt.

Die erfindungsgemäße Rändelungsstruktur am Unterteil bzw. Oberteil (Deckel) kann an unterschiedlichen Kanaltypen ausgebildet werden. Vorzugsweise handelt es sich um einen Installationskanal, bei dem die Seitenwände des Unterteils geschlossen sind. In einer alternativen Ausführungsform kann es sich um einen Installationskanal handeln, bei dem die Seitenwände des Unterteils durch senkrecht zum Boden verlaufende Schlitze zu Zungen umgeformt sind. In diesem Fall wären die Rändelungen auf beiden Seiten des Unterteils am Kopfende der Zungen der Seitenwände des Kanalunterteils ausgebildet. Die Rändelung wäre demnach am Unterteil nur abschnittsweise vorhanden, während die Gegenrändelung am Deckel durchgehend ausgebildet sein kann.

Die Struktur der Rändelungen bzw. der Gegenrändelungen ist ausreichend, dass ein Verdrahtungskanal mit durchgehenden Seitenwänden oder mit durch Zungen geformten Seitenwänden einen Deckel vor Verrutschen sicher halten kann. Die Struktur der Ränderlungen bzw. der Gegenrändelungen kann unterschiedliche geometrische Formen aufweisen. Bevorzugt ist eine Zackenstruktur oder W-Struktur. Andere geometrische Formen umfassen beispielsweise eine V-Struktur der Rändelungen bzw. Gegenrändelungen mit unterschiedlichen Winkeln bei den Zacken oder Spitzen. Auch Strukturen mit Doppelspitzen oder Zacken sind von der Erfindung erfasst. Daneben haben sich Rändelungen oder Gegenrändelungen als vorteilhaft herausgestellt, die eine komplexere Zackenstruktur aufweisen.

Die Erfindung wird in den nachfolgenden Zeichnungen näher erläutert.

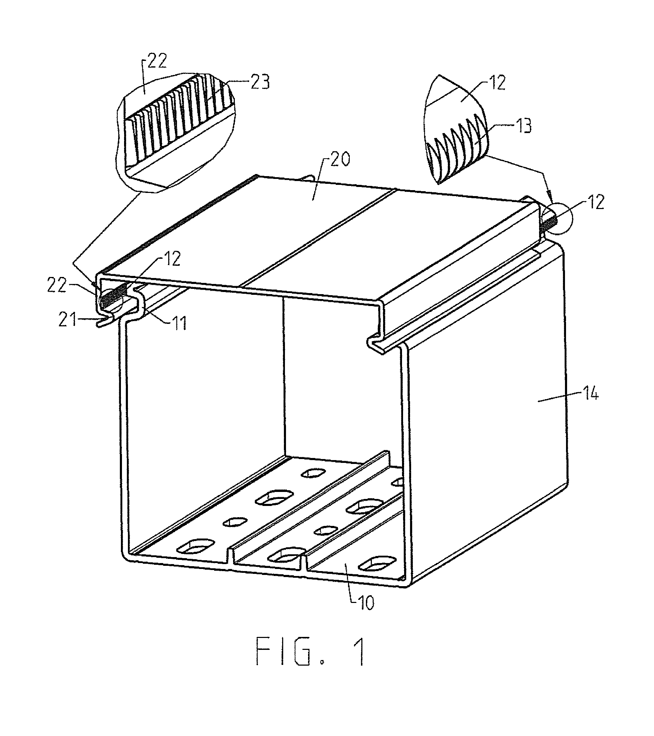

In Fig. 1 ist ein Unterteil 10 eines Kabelkanals gezeigt. Dieses besteht aus einem Boden und in der gezeigten Ausführungsform aus zwei senkrecht nach oben geneigten geschlossenen Seitenwänden 24. An den Kopfenden der Seitenwände 24 sind Deckelhalteprofile 11 zum Halt eines Deckels 20 ausgebildet. Der Deckel 20 verfügt über seitlich nach unten geneigte Schenkel, an deren Enden Formhalteprofile 21 ausgebildet sind, die mit den Deckelhalteprofilen 11 des Unterteils 10 beim Aufsetzen des Deckels 20 auf dem Unterteil 10 kooperieren.

Um ein Verrutschen des Deckels 20 gegenüber dem Unterteil 10 zu vermeiden, sind an einem Schenkelabschnitt 12 des Deckelhalteprofils 11 Rändelungen 13 eingearbeitet (siehe Ausschnittsvergrößerung). Am Deckel 20 wiederum sind an den Formhalteprofilen 21 an einer Innenseite eines Formschenkels 22 Gegenrändelungen 23 ausgebildet, die sich mit den Rändelungen 13 des Unterteils 10 verzahnen. Dadurch wird ein Verrutschen des Deckels gegenüber dem Unterteil 10 verhindert.

In der gezeigten Ausführungsform ist der Schenkelabschnitt 12 bzw. der Formschenkel 22 kurvenförmig bzw. gewölbt ausgestaltet, wodurch die Angriffsfläche bei der Verzahnung der Rändelung 13 mit der Gegenrändelung 23 vergrößert wird. Die Rändelung 13 bzw. Gegenrändelung 23 ist in der gezeigten Ausführungsform zacken- bzw. schlitzförmig ausgebildet.

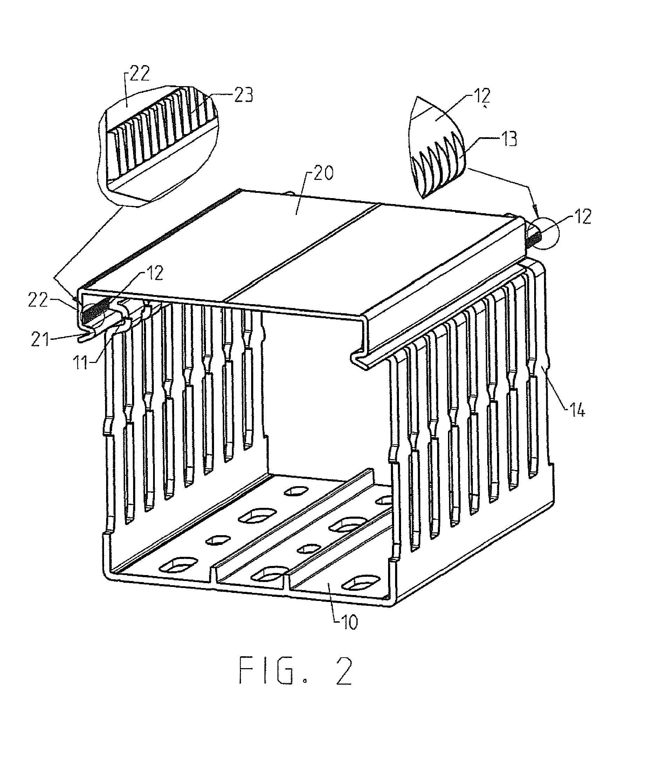

In Fig. 2 ist eine weitere Ausführungsform gezeigt, bei der die Seitenwände 14 eine Seitenstanzung aufweisen. Der Boden 10 umfasst Bodenlochungen. Der Deckel 20 wird an dem Unterteil 10 durch die Rändelung 13 des Unterteils 10 bzw. die Gegenrändelung 23 des Deckels 10 gehalten.

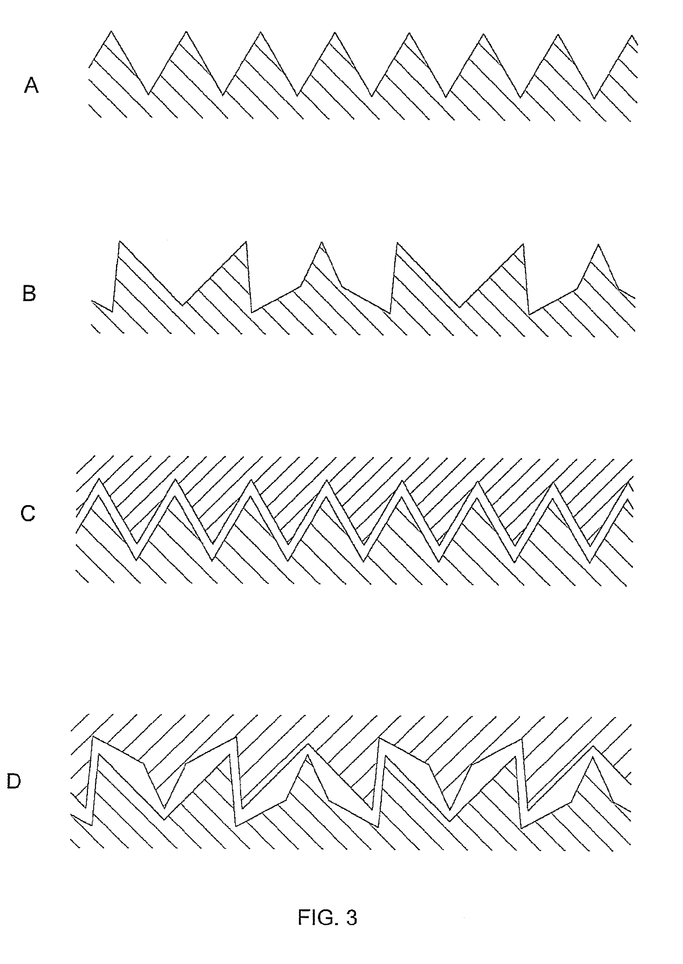

In Fig. 3 sind unterschiedliche geometrische Ausgestaltungen und Strukturen möglicher Rändelungen 13 bzw. Gegenrändelungen 23 gezeigt. Die Figuren 3A bis 3D zeigen unterschiedliche Zackenstrukturen.

## Patentansprüche

1. Verdrahtungskanal, bestehend aus
- einem U-förmigen Unterteil (10) mit einem Boden und Seitenwänden (14) sowie daran ausgebildeten Deckelhalteprofilen (11),
- einem U-förmigen Deckel (20) zum Aufsetzen auf das Unterteil (10) mit daran ausgebildeten Formprofilen (21), die zum Halten des Deckels (20) mit den Deckelhalteprofilen (11) des Unterteils (10) kooperieren, **dadurch gekennzeichnet, dass** die Deckelhalteprofile (11) des Unterteils (10) einen äußeren Schenkelabschnitt (12) bilden, in dem in Längsrichtung des Kanals eine Rändelung (13) eingebracht ist und dass die Formhalteprofile (21) des Deckels (20) einen Formschenkel (22) bilden, an dessen zur Kanalmitte weisenden Innenseite eine Gegenrändelung (23) ausgebildet ist, die sich mit der Rändelung (13) des Unterteils (10) verzahnt, wenn die Formhalteprofile (21) des Deckels (20) beim Aufsetzen des Deckels (20) mit den Deckelhalteprofilen (11) des Unterteils (10) kooperieren.

2. Verdrahtungskanal nach Anspruch 1, **dadurch gekennzeichnet, dass** die Rändelung (13) des Unterteils (10) und die Gegenrändelung (23) des Oberteils (20) gleichmäßig entlang der Kanalstrecke verlaufen.

3. Verdrahtungskanal nach Anspruch 1 oder 2, **dadurch gekennzeichnet, dass** die Rändelung (13) und die Gegenrändelung (23) zackenförmig in das Material des Kanals eingearbeitet sind.

4. Verdrahtungskanal nach einem der vorhergehenden Ansprüche, **dadurch gekennzeichnet, dass** die Deckelhalteprofile (11) des Unterteils (10) und das Fußstück des Formhalteprofils (21) des Oberteils (20) U-förmig ausgebildet sind und dass das U-förmige Fußstück des Formhalteprofils (21) in dem U-Profil des Deckelhalteprofils (11) geführt ist.

5. Verdrahtungskanal nach einem der vorhergehenden Ansprüche, **dadurch gekennzeichnet, dass** der Schenkelabschnitt (12) mit der daran ausgebildeten Rändelung (13) und/oder die Formschenkel (22) mit der daran ausgebildeten Gegenrändelung (23) kurvenförmig oder gewölbt ausgeformt ist/sind.

6. Verdrahtungskanal nach einem der vorhergehenden Ansprüche, **dadurch gekennzeichnet, dass** die Rändelung (13) des Unterteils (10) und/oder die Gegenrändelung (23) am Deckel (20) abschnittsweise ausgebildet ist/sind.

7. Verdrahtungskanal nach einem der vorhergehenden Ansprüche, **dadurch gekennzeichnet, dass** die Rändelung (13) des Unterteils (10) und/oder die Gegenrändelung (23) am Deckel (20) durchgehend ausgebildet ist/sind.

8. Verdrahtungskanal nach einem der vorhergehenden Ansprüche, **dadurch gekennzeichnet, dass** die Seitenwände (14) des Unterteils (10) geschlossen sind.

9. Verdrahtungskanal nach einem der vorhergehenden Ansprüche, **dadurch gekennzeichnet, dass** die Seitenwände (14) des Unterteils (10) durch senkrecht zum Boden verlaufende Schlitze zu Zungen umgeformt sind.

10. Verdrahtungskanal nach einem der vorhergehenden Ansprüche, **dadurch gekennzeichnet, dass** die Rändelung (13) bzw. die Gegenrändelungen (23) eine geometrische Ausgestaltung oder Struktur besitzt, wie in den Figuren 3A bis 3D gezeigt.
